# EUROPEAN PATENT APPLICATION

(11) **EP 3 206 181 A1**
(43) Date of publication of application: **16.08.2017**
(21) Application number: 15849130.8
(22) Date of filing: 28.08.2015
(51) Int. Cl.: G06Q 50/18

(54) **LAWSUIT WINNING POSSIBILITY EVALUATION DEVICE AND METHOD**

(30) Priority: 06.10.2014 KR 20140134399
(71) Applicant: Kim, Jeongchul, Seoul 03755 (KR)
(72) Inventor: Kim, Jeongchul, Seoul 03755 (KR)
(74) Representative: RatnerPrestia
(86) International application number: PCT/KR2015/009069
(87) International publication number: WO 2016/056749

(57) **Abstract**

Disclosed are a lawsuit winning possibility evaluation device and a method using the same, the lawsuit winning possibility evaluation device comprising: a first communication unit for transmitting, to a client device, a selection request for the type of lawsuit; a legally required fact list generation unit for generating a legally required fact list according to the type of lawsuit selected by the client device; a second communication unit for transmitting, to the client device, an evidence information input request for the legally required fact list; and an evaluation information generation unit for generating first evaluation information, which has been scored for a degree of proof on the basis of evidence information inputted by the client device; and a lawsuit winning possibility evaluation result processing unit for generating a lawsuit winning possibility evaluation result by using the first evaluation information.

## Description

### Technical Field

The present disclosure relates to an apparatus and method for evaluating a lawsuit winning possibility, and more particularly, to an apparatus and method for evaluating a lawsuit winning possibility based on evidence that a user has and the expertise of each professional.

### Background Art

A large number of parties to lawsuits browse the Internet every day to figure out their situations. However, they cannot solve their legal problems, only to get fragmentary knowledge, with the current Internet search system. A party to a lawsuit should determine which lawyer to hire, and even though the party hires an attorney to represent the party in proceedings, the party has a concern regarding a lawsuit winning possibility.

To avert this problem, there exists a need for a programmed law service beyond a conventional fragmentary law information search service or an on-line law service of seeking assistance from lawyers or professionals by query and answer in their own Internet sites.

Related documents are Korea Laid-Open Patent No. 10-2013-0098511, Korea Registered Patent No. 10-0836901, and Korea Laid-Open Patent 2001-0107295.

### Disclosure

### Technical Problem

An aspect of the present disclosure is to provide an apparatus and method for evaluating a lawsuit winning possibility based on evidence that a user has and the expertise of each professional.

### Technical Solution

In an aspect of the present disclosure, an apparatus for evaluating a lawsuit winning possibility includes a first communication unit for transmitting a lawsuit type selection request to a client device, a legally required fact list generator for generating a legally required fact list according to a lawsuit type selected by the client device, a second communication unit for transmitting an evidence information input request for the legally required fact list to the client device, an evaluation information generator for generating first evaluation information by scoring a degree of proof based on evidence information input by the client device, and a lawsuit winning possibility evaluation result processor for generating a lawsuit winning possibility evaluation result based on the first evaluation information.

The apparatus may further include a database for storing legally required fact lists, evidence information, and recommended professional lists each including an expertise score for each recommended professional, by lawsuit type.

The evaluation information generator may load a recommended professional list according to the lawsuit type selected by the client device from the database, provide the recommended professional list to the client device, and generate second evaluation information based on an expertise score of a recommended professional selected by the client device, and the lawsuit winning possibility evaluation result processor may generate the lawsuit winning possibility evaluation result based on the first evaluation information and the second evaluation information.

The lawsuit winning possibility evaluation result processor may represent the generated lawsuit winning possibility evaluation result as a score or a chart, and provide the score or the chart to the client device.

The lawsuit type may be any of civil lawsuit, administrative lawsuit, and domestic lawsuit.

The evaluation information generator may assign a predetermined weight to evidence information corresponding to each legally required fact, and generate the first evaluation information using the predetermined weights.

The expertise score of each recommended professional may be calculated using at least one of a professional career, a background, an academic degree, a history of winnings in lawsuits of a lawsuit type, and experience in lawsuits of the lawsuit type, of the recommended professional.

If the client device selects a plurality of recommended professionals, the lawsuit winning possibility evaluation result processor may generate a lawsuit winning possibility evaluation result individually for each of the recommended professionals.

The lawsuit winning possibility evaluation result processor may arrange a plurality of lawsuit winning possibility evaluation results based on values of the lawsuit winning possibility evaluation results or advertisement weights for the recommended professionals, and provide the arranged lawsuit winning possibility evaluation results to the client device.

In another aspect of the present disclosure, a method for evaluating a lawsuit winning possibility in a lawsuit winning possibility evaluation apparatus includes transmitting a lawsuit type selection request to a client device, generating a legally required fact list according to a lawsuit type selected by the client device, transmitting an evidence information input request for the legally required fact list to the client device, generating first evaluation information by scoring a degree of proof based on evidence information input by the client device, and generating a lawsuit winning possibility evaluation result based on the first evaluation information.

The method may further include loading a recommended professional list according to the lawsuit type selected by the client device from a database, the recommended professional list including an expertise score for each recommended professional, providing the recommended professional list to the client device, and generating second evaluation information based on an expertise score of a recommended professional selected by the client device. The generation of a lawsuit winning possibility evaluation result may include generating the lawsuit winning possibility evaluation result based on the first evaluation information and the second evaluation information.

The method may further include representing the generated lawsuit winning possibility evaluation result as a score or a chart, and providing the score or the chart to the client device.

The lawsuit type may be any of civil lawsuit, administrative lawsuit, and domestic lawsuit.

The generation of first evaluation information may include assigning a predetermined weight to evidence information corresponding to each legally required fact, and generating the first evaluation information using the predetermined weights.

The expertise score of each recommended professional may be calculated using at least one of a professional career, a background, an academic degree, a history of winnings in lawsuits of a lawsuit type, and experience in lawsuits of the lawsuit type, of the recommended professional.

If the client device selects a plurality of recommended professionals, the generation of a lawsuit winning possibility evaluation result may include generating a lawsuit winning possibility evaluation result individually for each of the recommended professionals.

The method may further include arranging a plurality of lawsuit winning possibility evaluation results based on values of the lawsuit winning possibility evaluation results or advertisement weights for the recommended professionals, and providing the arranged lawsuit winning possibility evaluation results to the client device.

### Advantageous Effects

According to the present disclosure, if a user answers a questionnaire according to a current legal situation in which the user is placed through the user's terminal, the user receives objective data quantified by an algorithm that simplifies the judicial structure of litigation proceedings from a system, and thus acquires a customized result, not fragmentary knowledge, through an analysis adapted to specific features of the user.

Since a large number of legal decisions are schematized and judicially established, an algorithm may be formed with them. The algorithm enables formation of an objective scheme through quantification. Accordingly, since a computer system is mainly responsible for making legal decisions, a decision possibility based on subjective opinions can be lowered and a decision time can be shortened. Further, the present disclosure can solve the problems of the knowledge difference between individual lawyers, high cost, misleading consultation of a greedy lawyer, and so on.

### Brief Description of the Drawings

FIG. 1 is a block diagram of a computer environment in which an apparatus and method for evaluating a lawsuit winning possibility according to an embodiment of the present disclosure are implemented.
FIG. 2 is a block diagram of an apparatus 1000 for evaluating a lawsuit winning possibility according to an embodiment of the present disclosure.
FIG. 3 is a diagram illustrating results of evaluating lawsuit winning possibilities according to an embodiment of the present disclosure.
FIG. 4 is a flowchart illustrating a method for evaluating a lawsuit winning possibility based on user-input evidence information according to an embodiment of the present disclosure.

### Mode for Carrying Out the Invention

The terms as used in the present disclosure are provided to describe merely specific embodiments, not intended to limit the scope of the present disclosure. It is to be understood that singular forms include plural referents unless the context clearly dictates otherwise. In the present disclosure, the term 'have' or 'include' signifies the presence of a specific feature, number, step, operation, component, part, or a combination thereof, not excluding the presence of addition of one or more other features, numbers, steps, operations, components, parts, or combinations thereof.

The terms and words including technical or scientific terms used in the following description and claims may have the same meanings as generally understood by those skilled in the art. The terms as generally defined in dictionaries may be interpreted as having the same or similar meanings as or to contextual meanings of related technology. Unless otherwise defined, the terms should not be interpreted as ideally or excessively formal meanings. In relation to a description of the drawings, like reference numerals denote the same components. In the description of embodiments, lest it should obscure the subject matter of the present disclosure, a detailed description of a known function or component will not be provided. In the drawings, the size of each component may be shown as exaggerated compared to its actual size.

The embodiments described in the present disclosure may have an aspect of full hardware, partial hardware and partial software, or full software. In the present disclosure, the term "unit", "module", "device", or "system" indicates a computer-related entity such as hardware, a combination of hardware and software, or software. For example, a unit, a module, a device, or a system in the present disclosure may be, but not limited to, a process being executed, a processor, an object, an executable file, a thread of execution, a program, and/or a computer. For example, both a computer and an application being executed in the computer may correspond to units, modules, devices, or systems in the present disclosure.

Embodiments are described with reference to flowcharts illustrated in the drawings. While the method is illustrated and described in a series of blocks, for brief description, the present disclosure is not limited to the sequence of the blocks. Thus, some blocks may take place simultaneously or in a different order from that illustrated and descried in the present disclosure. Further, various other sequences of branches, flow paths, and blocks that achieve the same or similar results may be implemented. All of the illustrated blocks are not required to realize the method described in the present disclosure. The method according to an embodiment of the present disclosure may be implemented in the form of a computer program for performing a series of operations, and the computer program may be recorded to a computer-readable recording medium.

In the description of embodiments, lest it should obscure the subject matter of the present disclosure, a detailed description of a known function or component will not be provided herein.

Now, a detailed description will be given of embodiments of the present disclosure with reference to the attached drawings.

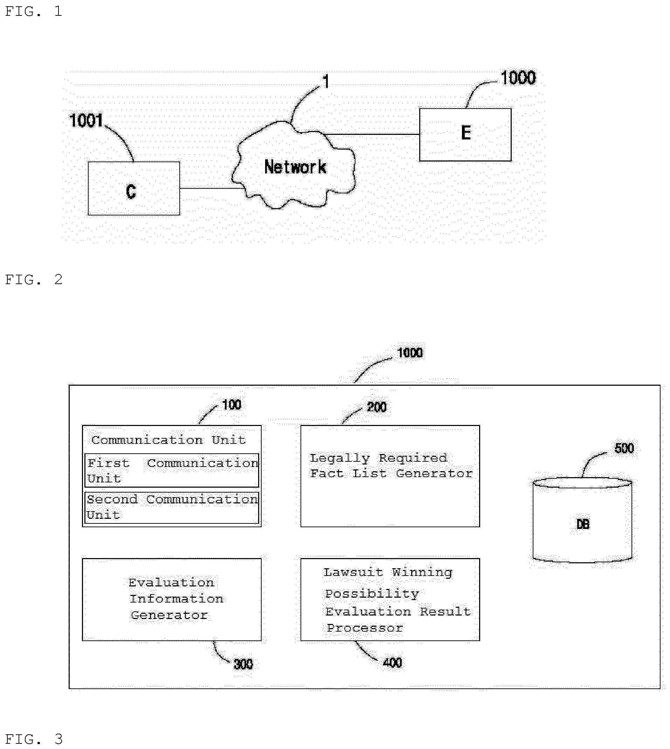

FIG. 1 is a block diagram illustrating a computer environment in which an apparatus and method for evaluating a lawsuit winning possibility according to an embodiment of the present disclosure are implemented. Referring to FIG. 1, the computer environment includes a client device 1001 and a lawsuit winning possibility evaluation apparatus 1000 which are communicatively connected to each other through a network 1. For simplification and clarity of description of the embodiments, a single client device and a single lawsuit winning possibility evaluation apparatus are shown. In other words, other entities such as a Web server may exist in addition to the client device 1001 and the lawsuit winning possibility evaluation apparatus 1000 in the computer environment.

The lawsuit winning possibility evaluation apparatus 1000 is hardware configured to provide a lawsuit winning possibility evaluation service to the client device 1001 or another system. According to the lawsuit winning possibility evaluation service, a lawsuit winning possibility is evaluated based on queries and various types of information that a service user provides to the lawsuit winning possibility evaluation apparatus 1000.

The lawsuit winning possibility evaluation apparatus 1000 may be communicatively connected to the client device 1001, and transmit and receive data including various requests or evaluation results. Further, one or more lawsuit winning possibility evaluation apparatuses 1000 may interact with the client device according to another embodiment of the present disclosure. The lawsuit winning possibility evaluation apparatus 1000 may be a kind of server.

The network 1 enables communication between the lawsuit winning possibility evaluation apparatus 1000 and the client device 1001. In an embodiment, the network 1 uses a standard communication technology/protocol. Therefore, the network 1 may include links conforming to technologies such as Ethernet, institute of electrical and electronics engineers (IEEE) 802.11, worldwide interoperability for microwave access (WiMAX), 2^{nd} generation/3^{rd} generation/4^{th} generation (2G/3G/4G), digital subscriber line (DSL), asynchronous transfer mode (ATM), infiniband, and PCI express advanced switching. Similarly, networking protocols used in the network 1 include multiprotocol label switching (MPLS), transmission control protocol/Internet protocol (TCP/IP), user datagram protocol (UDP), hypertext transport protocol (HTTP), simple mail transfer protocol (SMTP), and file transfer protocol (FTP). Data exchanged through the network 1 may be represented in technologies and/or formats including image data of a binary format (e.g., portable network graphics (PNG)), hypertext markup language (HTML), or extensible markup language (XML).

The client device 1001 is a computer system. The client device 1001 may be a smartphone, a desktop computer, a laptop computer, a digital camera, a wearable digital device, a personal digital assistant (PDA), or a tablet personal computer (PC).

FIG. 2 is a block diagram of the lawsuit winning possibility evaluation apparatus 1000 according to an embodiment of the present disclosure. Referring to FIG. 2, the lawsuit winning possibility evaluation apparatus 1000 may include a communication unit 100, a legally required fact list generator 200, an evaluation information generator 300, and a lawsuit winning possibility evaluation result processor 400.

In an embodiment, the communication unit 100 may include a first communication unit 110 and a second communication unit 120. The first communication unit 110 may transmit a lawsuit type selection request to the client device 1001.

Lawsuit types may include, but not limited to, civil lawsuit, administrative lawsuit, criminal lawsuit, domestic lawsuit, and so on. More specifically, the lawsuit types may further be branched into lower-level lawsuits such as loan repayment lawsuit, and building transfer lawsuit. When the client device 1001 receives the lawsuit type selection request, a user may select a lawsuit type according to the user's current situation, and the client device 1001 may transmit data about the selected lawsuit type to the lawsuit winning possibility evaluation apparatus 1000. The first communication unit 110 may receive the data from the client device 1001.

The legally required fact list generator 200 may generate a legally required fact list according to the lawsuit type selected by the client device 1001. For example, if the lawsuit type is loan repayment lawsuit, the legally required fact list may include the following.
ⓐ Existence of a loan for consumption contract (loan contract)
ⓑ transfer of a target object (payment of loan funds)
ⓒ Interest rate agreement (if agreed interest is also requested)
ⓓ Arrival of the time at which the obligation to return is due for performance
   ① Maturity date is fixed
   ② Maturity date is not fixed (existence of notice + lapse of reasonable time).

In an embodiment, the lawsuit winning possibility evaluation apparatus 1000 may further include a database 500 that stores legally required fact lists, evidence information, and recommended expert lists each including an expertise score of each recommended expert, by lawsuit type.

A legally required fact list may be a table that lists legally required facts corresponding to a specific lawsuit type. The expertise score of a recommended professional may be a quantified value for the expertise of the recommended professional, as stored in the database 500.

According to an embodiment, the legally required fact list generator 200 may generate a legally required fact list by extracting legally required facts from the database 500 that stores legally required facts by lawsuit type.

Once the legally required fact list is generated, the second communication unit 120 may transmit an evidence information input request for the legally required fact list to the client device 1001. That is, the second communication unit 120 may request a user to input information regarding evidence corresponding to each legally required fact. For example, it may be asked whether the user has concrete evidence regarding the above legally required facts ⓐ, ⓑ, ⓒ. and ⓓ (if the user is a plaintiff).

Upon receipt of evidence information regarding each legally required fact listed in the legally required fact list from the client device 1001, the evaluation information generator 300 may generate first evaluation information which is a scored degree of proof based on the evidence information input by the client device 1001. The first evaluation information may be represented as an integer or a percentage.

For example, the degree of proof is different in the cases where the user has concrete evidence regarding the above legally required facts ⓐ, ⓑ, ⓒ, and ⓓ, the user just has circumstantial evidence without concrete evidence regarding the above legally required facts ⓐ, ⓑ, ⓒ, and ⓓ, and the user has no evidence regarding the above legally required facts ⓐ, ⓑ, ⓒ, and ⓓ. Therefore, the first evaluation information may have different values for the cases. That is, the evaluation information generator 300 may calculate a lawsuit winning possibility numerically by scoring the existence of evidence individually.

Further, since each legally required fact affects the result of a lawsuit differently, the evaluation information generator 300 may assign a predetermined weight to evidence information corresponding to each legally required fact, and generate the first evaluation information using the predetermined weights.

For example, information about a weight for each legally required fact may be stored in a database, and the evaluation information generator 300 may generate evaluation information using information stored in the database. The weight for each legally required fact, stored in the database may be determined based on precedents. For this purpose, data of precedents may be stored in the database. Therefore, a different weight may be assigned to evidence determined to be more important or less important in existing precedents.

The evaluation information generator 300 may determine whether a current case is identical or similar to an existing case for which precedent information exist, and may determine a weight for a legally required fact (evidence corresponding to the legally required fact) of the current case based on the identity or similarity. The weight determination may be more helpful to lawsuits in the U.S.

In an exemplary embodiment, the evaluation information generator 300 assigns a basic score of 70 in the presence of concrete evidence for all of the legally required facts ⓐ, ⓑ, ©, and ⓓ, and adds a score of 5 each time there is additional evidence, until up to a score of 80 is reached. Or when there is concrete evidence only for a part of the legally required facts ⓐ, ⓑ, ⓒ, and ⓓ, for example, there is no direct evidence for the legally required fact ⓐ, a basic score of 30 may be given despite of the presence of evidence for the other legally required facts ⓑ, ⓒ, and ⓓ. However, considering that the legally required fact ⓒ is related to a request for interest, if there is no evidence only for the legally required fact ⓒ, a basic score of 70 may be assigned to a request for the amount of principal, and a basic score of 30 may be assigned only to a request for interest. For a legally required fact that has only indirect evidence without concrete evidence, a score of 5 may be assigned per piece of indirect evidence, until up to a score of 50 is reached, which should not be construed as limiting the present disclosure.

The evaluation result processor 400 may generate a lawsuit winning possibility evaluation result using the first evaluation information. The lawsuit winning possibility evaluation result may be expressed as a score or a chart such as a graph, like evaluation information.

For example, the evaluation result processor 400 may determine the winning possibility of a plaintiff by standard-scoring a degree of proof regarding a legally required fact, and the winning possibility of a defendant by standard-scoring a degree of proof regarding assertion of defense.

In another embodiment, the evaluation information generator 300 may load a recommended professional list from the database 500 according to a lawsuit type selected by the client device 1001, provide the loaded recommended professional list to the client device 1001, and generate second evaluation information based on an expertise score of a recommended professional selected by the client device 1001. For this purpose, the database 500 may store recommended professional lists by lawsuit type.

Once the second evaluation information is generated, the lawsuit winning possibility evaluation result processor 400 may generate a lawsuit winning possibility evaluation result based on the first evaluation information and the second evaluation information. That is, the lawsuit winning possibility of a case may be predicted more accurately using the first evaluation information as a factor for evaluating a lawsuit winning possibility based on the state of the current prepared evidence information, and using the second evaluation information as a factor for evaluating the expertise of a professional as a litigation representative.

In an embodiment, the evaluation information generator 3000 may calculate an expertise score for each recommended professional based on at least one of the professional career, background, academic degree, history of winnings in lawsuits of a corresponding lawsuit type, and experience in lawsuits of the lawsuit type, of the recommended professional.

For example, the professional may be a lawyer, and the expertise score of the lawyer may be calculated according to a career as a lawyer, whether the lawyer has acquired qualification as a lawyer by passing a national bar exam or graduating from a law school, whether the lawyer has an academic degree, the final education of the lawyer, and the lawyer's experience and winning history in lawsuits of a corresponding lawsuit type.

If the client device 1001 selects a plurality of recommended professionals, the lawsuit winning possibility evaluation result processor 4000 may generate lawsuit winning possibility evaluation results for the individual selected professionals. Thus, the plurality of lawsuit winning possibility evaluation results may be generated and provided to the user through the client device 1001.

Although the first evaluation information may be regarded as objective evaluation information, there may exist a plurality of representatives having similar evaluation information values in relation to selection of a representative. Accordingly, if the user selects a plurality of representatives, lawsuit winning possibility evaluation results for the plurality of representatives may be provided to the user, to thereby give the user an opportunity to select an intended representative.

For this purpose, factors used to calculate the above-described expertise scores may be provided to the user. That is, the academic backgrounds or legal careers of the professionals may be provided.

In an embodiment, the lawsuit winning possibility evaluation result processor 400 may arrange a plurality of lawsuit winning possibility evaluation results based on values of the lawsuit winning possibility evaluation results or advertisement weights for the recommended professionals, and provide the arranged lawsuit winning possibility evaluation results to the user.

FIG. 3 is a view illustrating lawsuit winning possibility evaluation results according to an embodiment of the present disclosure. FIG. 3 is an example displayed on a screen of the client device 1001. If a plurality of professionals are selected, the lawsuit winning possibility evaluation result of each recommended professional may be displayed. Recommended professionals A and B have wining possibilities of 45% and 47%, respectively, and recommended professional C has a winning possibility of 60%. The user may select professional C based on these results. Further, if the user is to select any other professional according to the user's personal experience or for any other reason, a plurality of professionals may be presented as illustrated in FIG. 3. Therefore, the user may select a professional having a winning possibility next to that of professional C from among a plurality of professionals whose wining possibilities are displayed.

In an embodiment, if lawsuit winning possibility evaluation results are arranged based on their values, the user may view the professionals in an ascending or descending order of winning possibilities.

Meanwhile, if the lawsuit winning possibility evaluation results are arranged based on the advertisement weights of the recommended professionals, a professional exposed more frequently to the user may be determined according to the professional's advertisement weight. For example, a service provider that provides a lawsuit winning possibility evaluation service may have a business model of selling advertisement weights to professionals.

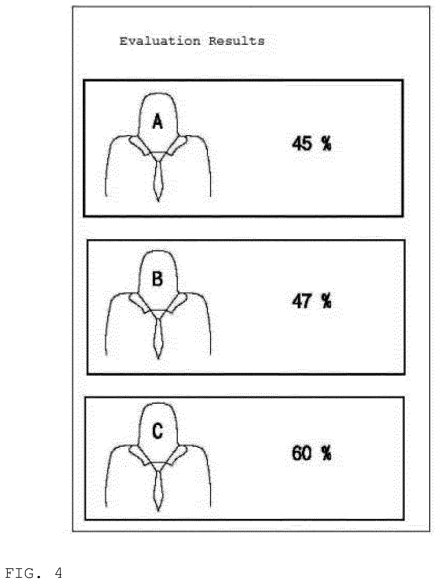

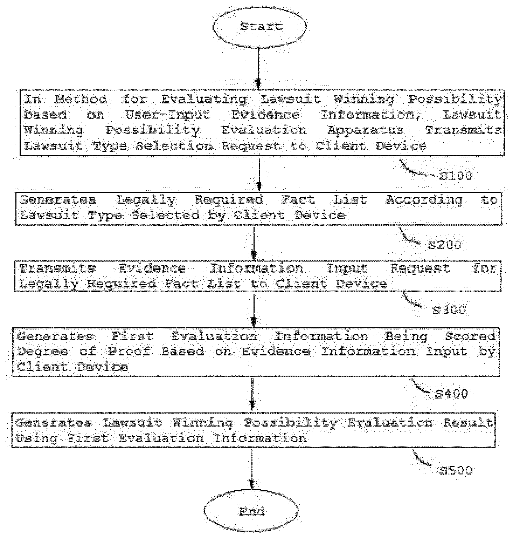

FIG. 4 is a flowchart illustrating a method for evaluating a lawsuit winning possibility based on user-input evidence information input according to an embodiment of the present disclosure. The method may be performed by the aforedescribed lawsuit winning possibility evaluation apparatus.

The method for evaluating a lawsuit winning possibility based on user-input evidence information includes transmitting a lawsuit type selection request to a client device in the lawsuit winning possibility evaluation apparatus (S100), generating a legally required fact list according to the lawsuit type selected by the client device (S200), transmitting an evidence information input request for the legally required fact list to the client device (S300), generating first evaluation information being a scored degree of proof based on evidence information input by the client device (S400), and generating a lawsuit winning possibility result using the first evaluation information (S500).

The method may include loading a recommended professional list from a database according to the lawsuit type selected by the client device, and the recommended professional list may include an expertise score of each recommended professional. The method may further include generating second evaluation information based on the expertise score of a recommended professional selected by the client device.

In the step of generating the lawsuit winning possibility evaluation result, the lawsuit winning possibility evaluation result may be generated using the first evaluation information and the second evaluation information.

The method may further include representing the generated lawsuit winning possibility evaluation result as a score or a chart and providing the score or the chart to the client device, and lawsuit types may include, but not limited to, civil lawsuit, administrative lawsuit, and domestic lawsuit.

The step of generating the first evaluation information may include assigning a predetermined weight to evidence information corresponding to each legally required fact, and generating the first evaluation information using the predetermined weights. The expertise score of each recommended professional may be calculated using at least one of the professional career, background, academic degree, history of winnings in lawsuits of a corresponding lawsuit type, and experience in lawsuits of the corresponding lawsuit type, of the recommended professional.

If the client device selects a plurality of recommended professionals, the step of generating the lawsuit winning possibility evaluation result includes generating a lawsuit winning possibility evaluation result for each selected individual professional and providing the lawsuit winning possibility evaluation results to the user. The step of generating the lawsuit winning possibility evaluation result may further include arranging a plurality of lawsuit winning possibility evaluation results based on values of the lawsuit winning possibility evaluation results or advertisement weights for the recommended professionals, and providing the arranged lawsuit winning possibility evaluation results to the user.

In the apparatus and method for evaluating a lawsuit winning possibility according to an embodiment of the present disclosure, a response may be requested to the client device 1001, and a lawsuit winning possibility may be determined based on the response.

In a lawsuit for loan repayment, for example, the lawsuit winning possibility evaluation apparatus 1000 may transmit an evidence information input request for a legally required fact list in the form of a multiple-choice questionnaire to the client device 1001 in order to prove fact that the original loan principal was disbursed, as illustrated in [Table 1].

**[Table 1]**

| Select all evidence proving the 'interest rate agreement' regarding the loan paid to the defendant. |
|---|
| A. Promissory note saying that the defendant borrows the loan from the plaintiff, signed by the defendant |
| B. Copy of the defendant's bankbook on which money transfer or deposit is printed |
| C. Receipt |
| D. Note saying that the defendant will make payment, signed by the defendant |
| E. Certification of contents urging the defendant to make payment |
| F. Recording of talks about the loan paid to the defendant |
| G. SNS messages on the principal amount, exchanged between you and the defendant |
| H. Witness who witnessed the loan at the scene of the loan and thus who knows well about the loan |
| I. Witness who was not at the scene where you lent the loan to the defendant but who can testify that he or she heard about the loan from you or the defendant. |
| J. Others |

The lawsuit winning possibility evaluation apparatus 1000 may also assign a weight to each piece of evidence information, like [Table 2].

**[Table 2]**

| |
|---|
| A: score 70 |
| B: score 30 |
| C: score 30 |
| D: score 60 |
| E: score 10 |
| F: score 40 |
| G: score 40 |
| H: score 30 |
| I: score 20 |
| J: score 10 |

Subsequently, the evaluation information generator 300 may score degrees of the provability of the above evidence selected by the user as admitted in the practice of law, and sum the scores. If the score sum exceeds 70, only a score of 5 may be added each time any evidence is added. For example, if the user selects B, C, and E, the score is 70. If the user selects A and B, the score sum is 100, but after the score exceeds 70, the score sum becomes 75.

To prove that the loan was disbursed, the lawsuit winning possibility evaluation apparatus 1000 may transmit an evidence information input request for a legally required fact list in the form of a multiple-choice questionnaire to the client device 1001, as illustrated in [Table 3].

**[Table 3]**

| In the case of evidence related to delivery of goods, select all evidence proving that you delivered goods to the defendant (answers that you selected in the above question may be selected redundantly). |
|---|
| A. You paid cash and received a receipt, promissory note, or note signed or legally sealed by the defendant. |
| B. You paid cash and a receipt, promissory note, or note not signed but unofficially sealed by the defendant. |
| C. You transferred money to the defendant's account and have a related copy of a transfer statement or a bankbook. |
| D. You paid cash to a third party and the third party will testify. |
| E. You paid cash to a third party, but the third party will not testify. |
| F. The defendant sent a text message indicating that the defendant received money, and you keep the text message without deleting it. |
| G. The defendant admitted that he or she received money, and you recorded the defendant's admission and keep the recording. |
| H. There is an objective witness (relatives are excluded) who knows that you gave money to the defendant. |

To prove that interest payment was agreed on, the lawsuit winning possibility evaluation apparatus 1000 may transmit an evidence information input request for a legally required fact list in the form of a multiple-choice questionnaire to the client device 1001, as illustrated in [Table 4].

**[Table 4]**

| Select all evidence that you have, proving that you lent the loan fund to the defendant (answers that you selected in the above question may also be selected redundantly). |
|---|
| A. Promissory note with the agreed interest written on it. |
| B. Note with the agreed interest written on it. |
| C. Receipt or any other document signed by the defendant, with the agreed interest written on it. |
| D. Call recording of a mentioned agreed interest. |
| E. Copy of a bankbook in which there is a record of deposited payments of interest. |
| F. SNS messages concerning the agreed interest, exchanged between the plaintiff and the defendant. |
| G. Certification of contents stating that the agreed interest is requested. |
| H. Witness that witnessed at the time when you made the loan to the defendant and thus knows well about the loan. |
| I. One who was not with you at the scene of the loan at the time when you made the loan to the defendant but heard about the loan from you or the other party and thus can give testimony as a witness. |
| J. Others |

Finally, the lawsuit winning possibility evaluation apparatus 1000 may generate a lawsuit winning possibility evaluation result as illustrated in [Table 5] below. The lawsuit winning possibility evaluation result is obtained only based on the first evaluation information, without reflecting the expertise of a recommended professional. In another embodiment, if second evaluation information about the expertise of a recommended professional is additionally used, a lawsuit winning possibility may be evaluated more accurately.

**[Table 5]**

| [Final decision of winning possibility] |
|---|
| Evidence of the loan of the principal amount: score 80 |
| Evidence of payment of the loan funds to the borrower: score 60 |
| Evidence of interest agreement: score 50 |
| The defendant shall pay 40,000,000KRW to the plaintiff (winning possibility for the principal amount: 60%+30x20/100=66%). |
| The defendant shall pay 40,000,000KRW and the interest on the principal amount at an annual interest rate of 24% from March 15, 2014 (winning possibility for the interest: 50%). |

In a criminal case, an evidence information input request for a legally required fact list may be transmitted in the form of a multiple-choice questionnaire to the client device 1001, as illustrated in [Table 6].

**[Table 6]**

| After the charge on which the user is booked is classified, if the user answers a detailed questionnaire according to the user's current situation, the answers are scored and the possibility of indictment or guilty verdict is determined and presented to the user. |
|---|
| Example) i) Are you currently booked? |
| ii) What is the reason for your booking? |
| 1) accusation |
| 2) complaint |
| 3) recognition of investigation agency |
| 4) caught red-handed |
| 5) others. |
| iii) Current progression state |
| 1) police investigation |
| 2) examination by the prosecution |
| 3) first criminal trial |
| 4) criminal trial on appeal |
| iv) What charges are you accused of? |
| v) Is there a victim? What is the amount of damage? |
| vi) Did you make a settlement with the victim? If settled, when did you make a settlement with the victim? |
| vii) How many people made statements in police investigation? How many people were in favor of you among them? |
| viii) Specific facts for each charge |

The answers to the questions in the above questionnaire may be scored, the possibility of guilty (innocent) verdicts, dismissal of public indictment, dismissal, and so on may be determined based on the scores, and thus the first evaluation information may be presented as a value. For example, it may be said that "You are innocent of sexual assault charges with a possibility of 78%".

In this case, the evaluation information generator 300 may evaluate a total winning possibility in consideration of an additional score (a second evaluation score) for an appointed lawyer in addition to the first evaluation information scored in the above manner. For example, in the case where the user gets a winning possibility of 47% from the lawsuit winning possibility determination system through the first questionnaire, if the user enters lawyer a and a basic value for lawyer a is 10%, the total winning possibility is given as 57% by adding the basic value to 47%. If the user enters lawyer b and 5% is added to the basic value of 10% based on the winning experience of lawyer b in a similar case, the total winning possibility is given as 62%.

While the present disclosure has been described with reference to the embodiments illustrated in the drawings, it is exemplary. Those skilled in the art will appreciate that many modifications and variations can be made to the present disclosure without departing from the spirit and essential characteristics of the present disclosure. Accordingly, the scope of the disclosure should be determined by the appended claims and their legal equivalents, not by the above description, and all changes coming within the meaning and equivalency range of the appended claims are intended to be embraced therein.

The reference numerals shown in the drawings showing embodiments of the present disclosure are described below.
100: Communication unit
200: Legally required fact list generator
300: Evaluation information generator
400: Lawsuit winning possibility evaluation result processor
500: Database
1000: Lawsuit winning possibility evaluation apparatus

## Claims

1. An apparatus for evaluating a lawsuit winning possibility, the apparatus comprising:
a first communication unit for transmitting a lawsuit type selection request to a client device;
a legally required fact list generator for generating a legally required fact list according to a lawsuit type selected by the client device;
a second communication unit for transmitting an evidence information input request for the legally required fact list to the client device;
an evaluation information generator for generating first evaluation information by scoring a degree of proof based on evidence information input by the client device; and
a lawsuit winning possibility evaluation result processor for generating a lawsuit winning possibility evaluation result based on the first evaluation information.

2. The apparatus according to claim 1, further comprising a database for storing legally required fact lists, evidence information, and recommended professional lists each including an expertise score for each recommended professional, by lawsuit type.

3. The apparatus according to claim 2, wherein the evaluation information generator loads a recommended professional list according to the lawsuit type selected by the client device from the database, provides the recommended professional list to the client device, and generates second evaluation information based on an expertise score of a recommended professional selected by the client device, and the lawsuit winning possibility evaluation result processor generates the lawsuit winning possibility evaluation result based on the first evaluation information and the second evaluation information.

4. The apparatus according to any of claims 1, 2, and 3, wherein the lawsuit winning possibility evaluation result processor represents the generated lawsuit winning possibility evaluation result as a score or a chart, and provides the score or the chart to the client device.

5. The apparatus according to claim 1, wherein the lawsuit type is any of civil lawsuit, administrative lawsuit, and domestic lawsuit.

6. The apparatus according to claim 1, wherein the evaluation information generator assigns a predetermined weight to evidence information corresponding to each legally required fact, and generates the first evaluation information using the predetermined weights.

7. The apparatus according to claim 2, wherein the expertise score of each recommended professional is calculated using at least one of a professional career, a background, an academic degree, a history of winnings in lawsuits of a lawsuit type, and experience in lawsuits of the lawsuit type, of the recommended professional.

8. The apparatus according to claim 3, wherein if the client device selects a plurality of recommended professionals, the lawsuit winning possibility evaluation result processor generates a lawsuit winning possibility evaluation result individually for each of the recommended professionals.

9. The apparatus according to claim 8, wherein the lawsuit winning possibility evaluation result processor arranges a plurality of lawsuit winning possibility evaluation results based on values of the lawsuit winning possibility evaluation results or advertisement weights for the recommended professionals, and provides the arranged lawsuit winning possibility evaluation results to the client device.

10. A method for evaluating a lawsuit winning possibility in a lawsuit winning possibility evaluation apparatus, the method comprising:
transmitting a lawsuit type selection request to a client device;
generating a legally required fact list according to a lawsuit type selected by the client device;
transmitting an evidence information input request for the legally required fact list to the client device;
generating first evaluation information by scoring a degree of proof based on evidence information input by the client device; and
generating a lawsuit winning possibility evaluation result based on the first evaluation information.

11. The method according to claim 10, further comprising:
loading a recommended professional list according to the lawsuit type selected by the client device from a database, the recommended professional list including an expertise score for each recommended professional;
providing the recommended professional list to the client device; and
generating second evaluation information based on an expertise score of a recommended professional selected by the client device,
wherein the generation of a lawsuit winning possibility evaluation result comprises generating the lawsuit winning possibility evaluation result based on the first evaluation information and the second evaluation information.

12. The method according to claim 10, further comprising representing the generated lawsuit winning possibility evaluation result as a score or a chart, and providing the score or the chart to the client device.

13. The method according to claim 10, wherein the lawsuit type is any of civil lawsuit, administrative lawsuit, and domestic lawsuit.

14. The method according to claim 10, wherein the generation of first evaluation information comprises:
assigning a predetermined weight to evidence information corresponding to each legally required fact; and
generating the first evaluation information using the predetermined weights.

15. The method according to claim 11, wherein the expertise score of each recommended professional is calculated using at least one of a professional career, a background, an academic degree, a history of winnings in lawsuits of a lawsuit type, and experience in lawsuits of the lawsuit type, of the recommended professional.

16. The method according to claim 11, wherein if the client device selects a plurality of recommended professionals, the generation of a lawsuit winning possibility evaluation result comprises generating a lawsuit winning possibility evaluation result individually for each of the recommended professionals.

17. The method according to claim 16, further comprising arranging a plurality of lawsuit winning possibility evaluation results based on values of the lawsuit winning possibility evaluation results or advertisement weights for the recommended professionals, and providing the arranged lawsuit winning possibility evaluation results to the client device.
